# EUROPEAN PATENT SPECIFICATION

(11) **EP 1 026 435 B1**
(45) Date of publication and mention of the grant of the patent: **11.05.2005**
(21) Application number: 00300504.8
(22) Date of filing: 24.01.2000
(51) Int. Cl.: F16L 37/084

(54) **Improvements in or relating to tube couplings**
Rohrkupplung
Raccord de tuyaux

(30) Priority: 05.02.1999 GB 9902681
(43) Date of publication of application: 09.08.2000
(73) Proprietor: JOHN GUEST LIMITED, West Drayton, Middlesex UB7 8JL (GB)
(72) Inventor: Guest, John Derek, Maidenhead, Berkshire SL6 2EX (GB)
(74) Representative: Bayliss, Geoffrey Cyril

(56) References cited:
- EP-A- 0 756 125
- GB-A- 2 131 110
- US-A- 4 915 136
- US-A- 5 472 016

## Description

This invention relates to tube couplings and in particular a latch collet pin for use in the assembly of a tube coupling.

A tube coupling is described in European Patent Application EP 0 756 125 A1 having a collet and an O-ring seal housed in a tube coupling body. In one embodiment, there is provided a stuffer pin on which the collet and seal are pre-assembled as a useful tool for the assembly of the collet/seal arrangement in the tube coupling body. The pin is then extracted.

According to the invention there is provided a latch collet pin for the assembly of a collet and seal of a tube coupling in a tube coupling body, the collet and seal being pre-assembled on the pin, wherein the pin has a through bore open to the seal from outside the coupling body through which a fluid under pressure may be directed to test the effectiveness of the seal after the collet/seal arrangement has been assembled in the tube coupling body, and prior to the pin being extracted.

Preferably the through bore in the pin comprises a blind bore extending along the length of the pin from its outer end to a position at least as far as the seal thereon, and at least one bore extending substantially radially through the pin wall and communicating the longitudinal bore to the area of the seal.

In one embodiment, the seal comprises two O-ring seals with the through bore open to the seal at a position between the O-rings. The O-rings may be separated by spacer means, for example, a spacer or washer.

In another embodiment, the seal comprises a single O-ring seal with the through bore open to the surface of the seal which after assembly in the tube coupling body faces internally of the tube coupling body.

Preferably the pin has means for orientating the pin and thereby the collet thereon relative to a mating port in the tube coupling body.

It is also preferred that the pin has means for retaining the collet/seal arrangement on the pin during its assembly in the tube coupling body without precluding the subsequent extraction of the pin. The retaining means may be flexible legs projecting radially from the pin, or an annular rib, at or adjacent its leading end.

Preferably the pin also allows the effectiveness of the seal to be tested by directing a fluid under pressure from within the tube coupling body.

By way of example, specific embodiments in accordance with the invention will be described with reference to the accompanying drawings in which:
Figure 1 is a sectional view of a latch collet pin for the assembly of a collet and seal in a tube coupling body with the collet/seal arrangement pre-assembled thereon, the pin having the capability of allowing the effectiveness of the seal to be tested after the collet/seal has been assembled in the tube coupling body.
Figure 2 is a sectional view of the pin with the collet/seal arrangement thereon of Figure 1 inserted into a tube coupling body;
Figure 3 illustrates the seal under test with pressurized fluid being directed through the pin;
Figure 4 illustrates the seal under test from within the tube coupling body; and
Figure 5 is a sectional view of another embodiment of latch collet pin and collet/seal arrangement inserted into a tube coupling body, the pin having a single O-ring seal.

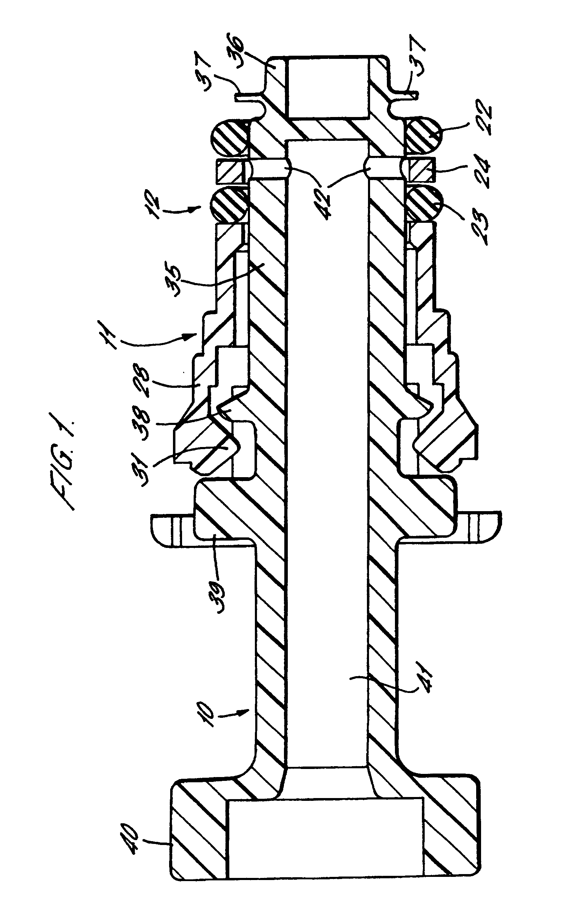

With reference to Figures 1 to 4 of the drawings, there is shown a latch collet pin 10 for the assembly of a collet 11 and seal 12 of a tube coupling in a mating port of a tube coupling body 13. The general type of tube coupling is described in European Patent Application EP 0756125 A1 and Figure 15 of that application illustrates a stuffer pin on which the collet and seal are pre-assembled before being assembled in the tube coupling body. The pin is then extracted therefrom.

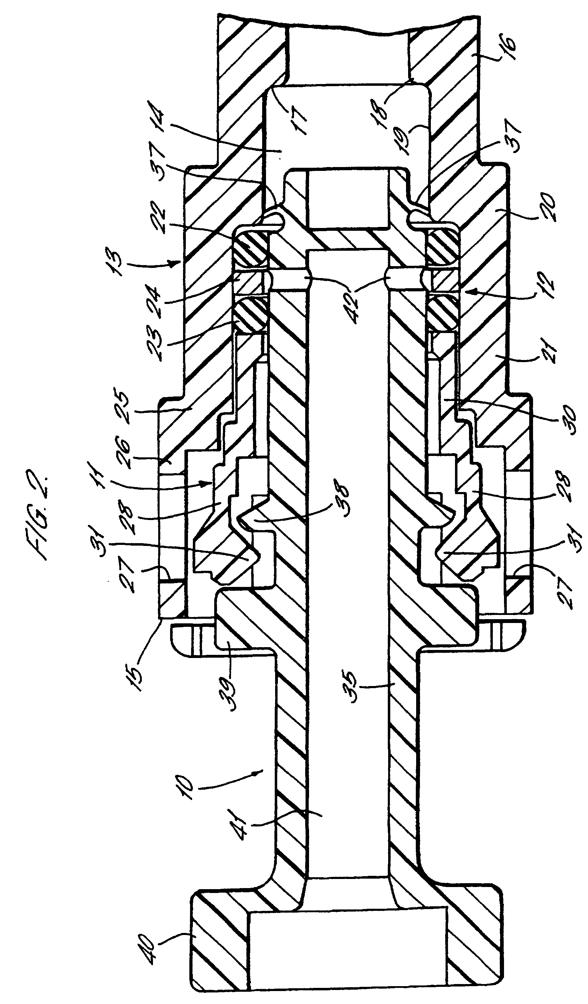

In the embodiment of the present invention, the tube coupling body (Figure 2) has a throughway 14 extending from one end 15 of the coupling body 13 for receiving an end part of a tube (not shown). At the other end 16 of the coupling body there is an inwardly projecting step 17 defining a central aperture 18 through which fluid can flow. The internal diameter 19 of the throughway adjacent end 16 of the coupling body is selected to receive the tube with a close fit and the step 17 forms an end stop for the tube. Part way along the coupling body, the wall of the body is formed with a step 20 forming an enlarged intermediate portion 21 for housing the seal 12 which in this embodiment comprises two O-ring seals 22, 23 with an intermediate spacer or washer 24. The O-rings combine to form a seal between the outer surface of the tube, when fitted, and the inner surface of the coupling body. The spacer or washer 24 may be omitted, if desired.

The intermediate portion 21 of the coupling body 13 has a step 25 connecting the intermediate portion to a further enlarged end portion 26 of the coupling body in which the open end to the throughway 14 is formed. The end portion 26 is formed with four rectangular apertures 27 at spaced peripheral locations to receive collet fingers 28 for locking the tube in the coupling body.

The collet 11 is located internally of the intermediate and further enlarged portions 21, 26 of the coupling body and comprises an annular sleeve 30 which locates with clearance in the intermediate portion 21. The collet has four collet fingers 28 spaced around the sleeve 30 which are outwardly cranked and which extend towards the open end 15 of the coupling. The fingers terminate in heads 31 to engage an upstanding flange formation on the tube to be fitted. The tube and further details of the collet are described and illustrated in European Patent Application EP 0 756 125 A1 and need not be further described in the present application.

The latch collet pin 10 is of moulded plastics material and has an intermediate wall portion 35 on which the collet 11 and seal 12 are pre-assembled and which has the same external diameter as the tube for which the tube coupling is designed to be connected. At the leading end of the pin 10 there is a portion 36 of reduced diameter having a plurality of integral outwardly extending flexible legs 37 peripherally spaced apart around the pin, which serve to retain the seal 12 (O-rings 22, 23) on the pin for transit, but allow the pin to be extracted without damaging the O-rings. Alternatively, the legs 37 may be replaced by an annular flexible rib which maintains the O-rings on the pin prior to its insertion into the coupling body, but is not a close fit in that part of the throughway 14 having the diameter 19. The intermediate portion 35 of the pin has a latch ring 38 for engagement with the heads 31 of the collet fingers 28 and which simulates the flange on the tube to which the coupling body is to be subsequently connected.

. The pin 10 further comprises two square shaped collars 39, 40 spaced apart along its length. Collar 39 closest to the ring 38 acts to orientate the pin 10 and fingers 28 of the collet 11 to the four apertures in the mating port of the tube coupling body 13. The other collar 40 provides a head for the pin which facilitates the pin to be extracted.

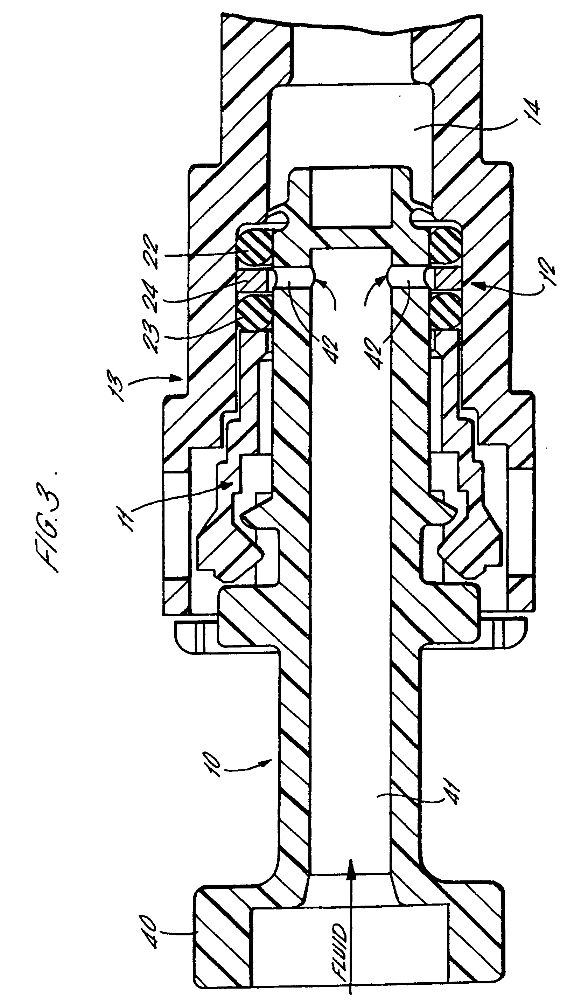

The pin 10 has the capability of allowing the effectiveness of the seal to be tested after the collet/seal has been assembled in the tube coupling body 13. For this purpose, the pin 10 has a through bore open to the O-ring seals 22, 23 from outside the coupling body 13 through which a fluid under pressure may be directed (Figure 3). The fluid is conveniently air, helium or water.

In this embodiment, the through bore is a blind bore 41 extending along the length of the pin 10 from its head end to a position at least as far as the O-ring seals 22, 23. Open radial bores 42 communicate the longitudinal bore 41 to the area of the seal between the O-rings. Because the O-rings are capable of shifting axially on the pin, the provision of the spacer or wash 24 is preferred to facilitate the alignment of the radial bores 42 to the area between the O-rings 22, 23. Another advantage of the spacing means is that it resists any tendency for the O-rings to become mis-aligned during assembly in the tube coupling body. For example, without any spacer, one ring may partially slide beneath the other.

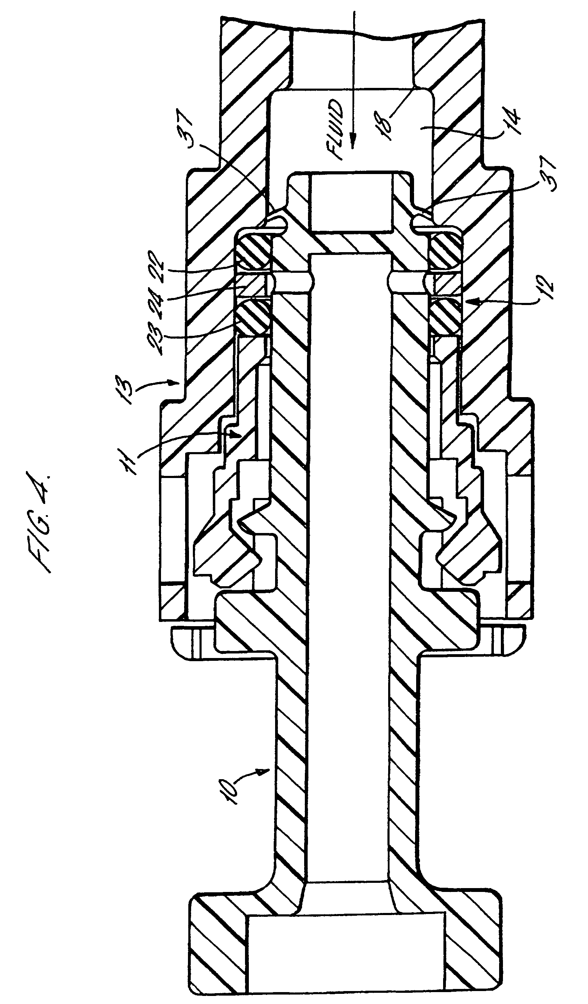

The pin 10 also allows fluid under pressure to be directed through end 15 of the tube coupling body for testing the effectiveness of the seal from within the coupling body 13 (Figure 4).

During testing through the pin 10, a test fluid, e.g. air, is pressurized externally by providing a sealed connection at the head end of the pin and directed through the bores 41, 42 to the area of the seal. Both O-rings must provide an effective seal to pass the test.

The second leak test method is to pressurize the seal assembly from within the tube coupling body. In this case only the inner O-ring 42 must pass the test.

In this manner, the pin allows two distinct methods of testing the seal of the coupling which effectively tests each O-ring 41, 42 independently. The pin 10 is then extracted.

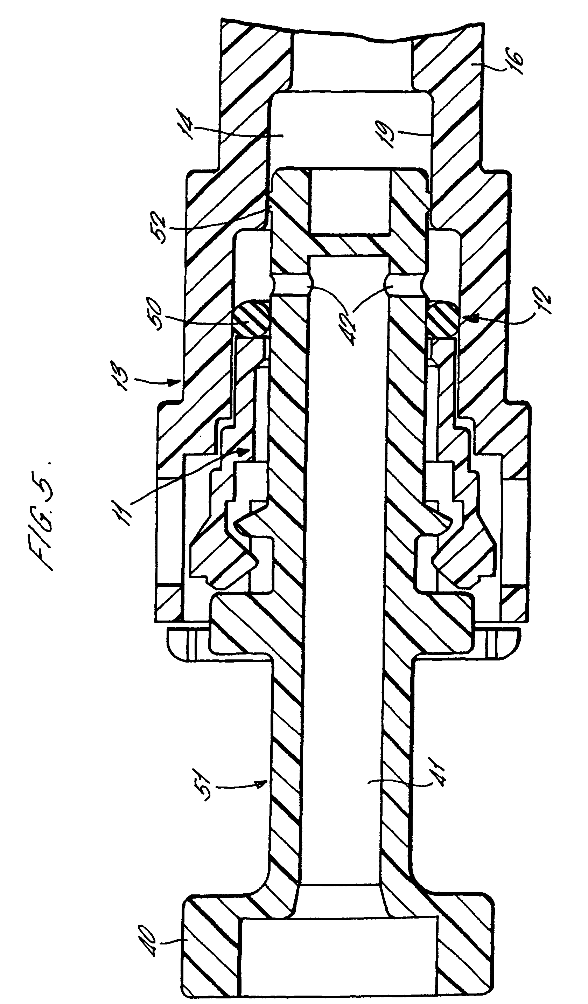

Figure 5 relates to another embodiment which has a different seal arrangement comprising a single O-ring 50 pre-assembled with the collet 11 on a stuffer pin 51. In this case, the pin has an annular flexible rib 52 at its leading end which is in sealing engagement with the diameter 19 of the throughway 14 adjacent end 16 of the coupling body 13. The rib 52 allows external pressurization and testing of the O-ring 50 by fluid directed through the longitudinal bore 41 and the radial bores in the pin 51. The radial bores 42 are open to the surface of O-ring 50 which faces internally of the coupling body 13. Thereby due to the presence of the rib 52, pressurized air directed through the pin will test the effectiveness of the seal 12.

The invention is not restricted to the specific features of the embodiments described above. For example, either stuffer pin 10, 51 may be modified for use with other designs of collet, whilst maintaining the capability of testing the effectiveness of the particular seal arrangement from at least externally of the tube coupling.

## Claims

1. A latch collet pin for the assembly of a collet and seal of a tube coupling in a tube coupling body, the collet (11) and seal (12) being pre-assembled on the pin (10), **characterised in that** the pin (10) has a through bore (41,42) open to the seal from outside the coupling body through which a fluid under pressure may be directed to test the effectiveness of the seal after the collet/seal arrangement has been assembled in the tube coupling body, and prior to the pin being extracted.

2. A latch collet pin as claimed in Claim 1, wherein the through bore in the pin comprises a blind bore extending along the length of the pin from its outer end to a position at least as far as the seal thereon, and at least one bore extending substantially radially through the pin wall and communicating the longitudinal bore to the area of the seal.

3. A latch collet pin as claimed in Claim 1 or Claim 2, wherein the seal comprises two O-ring seals with the through bore open to the seal at a position between the O-rings.

4. A latch collet pin as claimed in Claim 3, wherein the O-rings are separated by spacer means.

5. A latch collet pin as claimed in Claim 1 or Claim 2, wherein the seal comprises a single O-ring seal with the through bore open to the surface of the seal which after assembly in the tube coupling body faces internally of the tube coupling body.

6. A latch collet pin as claimed in any one of the preceding claims, wherein the pin has means for orientating the pin and thereby the collet thereon relative to the tube coupling body.

7. A latch collet pin as claimed in any one of the preceding claims, wherein the pin has means for retaining the collet/seal arrangement on the pin during its assembly in the tube coupling body without precluding the subsequent extraction of the pin.

8. A latch collet pin as claimed in Claim 7, wherein the retaining means are flexible legs projecting radially from the pin at or adjacent its leading end.

9. A latch collet pin as claimed in Claim 7, wherein the retaining means is an annular rib extending peripherally around the pin at or adjacent its leading end.

10. A latch collet pin as claimed in any one of the preceding claims, wherein the pin also allows the effectiveness of the seal to be tested by directing a fluid under pressure from within the tube coupling body.

## Patentansprüche

1. Sperrhülsenstift für die Montage einer Sperrhülse und Dichtung einer Rohrkupplung in einem Rohrkupplungsgehäuse, wobei die Sperrhülse (11) und Dichtung (12) auf dem Stift (10) vormontiert werden, **dadurch gekennzeichnet, dass** der Stift (10) eine durchgehende Bohrung (41, 42) aufweist, die zu der Dichtung von der Außenseite des Kupplungsgehäuses her offen ist und durch die ein Fluid unter Druck zugeführt werden kann, um die Wirksamkeit der Dichtung zu testen, nachdem die Sperrhülsen-Dichtungsanordnung in dem Rohrkupplungsgehäuse montiert worden ist und bevor der Stift herausgezogen wird.

2. Sperrhülsenstift nach Anspruch 1, bei dem die durchgehende Bohrung in dem Stift eine Sackbohrung umfasst, die sich über die Länge des Stiftes von seinem äußeren Ende bis zu einer Stelle mindestens so weit wie die darauf angebrachte Dichtung erstreckt, und mindestens eine Bohrung, die sich im Wesentlichen radial durch die Stiftwand erstreckt und die Längsbohrung mit dem Bereich der Dichtung verbindet.

3. Sperrhülsenstift nach Anspruch 1 oder 2, bei dem die Dichtung zwei O-Ringdichtungen aufweist, wobei die durchgehende Bohrung zu der Dichtung hin an einer Stelle zwischen den O-Ringen offen ist.

4. Sperrhülsenstift nach Anspruch 3, bei dem die O-Ringe durch Abstandsmittel getrennt sind.

5. Sperrhülsenstift nach Anspruch 1 oder 2, bei dem die Dichtung eine einzelne O-Ringdichtung aufweist, wobei die durchgehende Bohrung zu der Oberfläche der Dichtung hin offen ist, die nach dem Einsetzen in das Rohrkupplungsgehäuse dem Inneren des Rohrkupplungsgehäuses zugewendet ist.

6. Sperrhülsenstift nach einem der vorangehenden Ansprüche, bei dem der Stift Mittel zum Orientieren des Stiftes und damit der darauf befindlichen Sperrhülse relativ zu dem Rohrkupplungsgehäuse aufweist.

7. Sperrhülsenstift nach einem der vorangehenden Ansprüche, bei dem der Stift Mittel zum Festhalten der Sperrhülsen-Dichtungsanordnung auf dem Stift während seines Einsetzens in das Rohrkupplungsgehäuse, ohne das anschließende Herausziehen des Stiftes zu verhindern, aufweist.

8. Sperrhülsenstift nach Anspruch 7, bei dem die Rückhaltemittel flexible Zungen sind, die radial von dem Stift an oder nahe seinem Vorderende abstehen.

9. Sperrhülsenstift nach Anspruch 7, bei dem die Rückhaltemittel eine ringförmige Rippe aufweisen, die sich in Umfangsrichtung um den Stift an oder nahe seinem Vorderende erstreckt.

10. Sperrhülsenstift nach einem der vorangehenden Ansprüche, bei dem der Stift es auch ermöglicht, die Wirksamkeit der Dichtung zu testen durch Zuführung eines Fluids unter Druck von innerhalb des Rohrkupplungsgehäuses.

## Revendications

1. Broche pour bague de serrage de verrouillage pour l'assemblage d'une bague de serrage et d'un joint d'étanchéité d'un raccord de tuyau dans un corps de raccord de tuyau, la bague de serrage (11) et le joint d'étanchéité (12) étant préassemblés sur la broche (10), **caractérisée en ce que** la broche (10) possède un alésage débouchant (41, 42) ouvert sur le joint d'étanchéité à partir de l'extérieur du corps de raccord à travers lequel un fluide sous pression peut être dirigé pour tester l'efficacité du joint d'étanchéité après que le dispositif de bague de serrage/joint d'étanchéité ait été assemblé dans le corps de raccord de tuyau, et avant que la broche ait été extraite.

2. Broche pour bague de serrage de verrouillage selon la revendication 1, dans laquelle l'alésage débouchant dans la broche comprend un alésage aveugle s'étendant sur la longueur de la broche à partir de son extrémité externe jusqu'à une position au moins aussi éloignée que le joint d'étanchéité sur celle-ci, et au moins un alésage s'étendant sensiblement radialement à travers la paroi de la broche et faisant communiquer l'alésage longitudinal avec la surface du joint d'étanchéité.

3. Broche pour bague de serrage de verrouillage selon la revendication 1 ou la revendication 2, dans laquelle le joint d'étanchéité comprend deux joints d'étanchéité toriques avec l'alésage débouchant ouvert sur le joint d'étanchéité à une position située entre les joints toriques.

4. Broche pour bague de serrage de verrouillage selon la revendication 3, dans laquelle les joints toriques sont séparés par des moyens d'espacement.

5. Broche pour bague de serrage de verrouillage selon la revendication 1 ou la revendication 2, dans laquelle le joint d'étanchéité comprend un seul joint d'étanchéité torique avec l'alésage débouchant ouvert sur la surface du joint d'étanchéité qui, après l'assemblage dans le corps de raccord de tuyau fait face à l'intérieur du corps de raccord de tuyau.

6. Broche pour bague de serrage de verrouillage selon l'une quelconque des revendications précédentes, dans laquelle la broche possède des moyens pour orienter la broche et par conséquent la bague de serrage sur celle-ci par rapport au corps de raccord de tuyau.

7. Broche pour bague de serrage de verrouillage selon l'une quelconque des revendications précédentes, dans laquelle la broche possède des moyens pour retenir le dispositif de bague de serrage/joint d'étanchéité sur la broche pendant son assemblage dans le corps de raccord de tuyau sans empêcher l'extraction ultérieure de la broche.

8. Broche pour bague de serrage de verrouillage selon la revendication 7, dans laquelle les moyens de retenue sont des pattes flexibles faisant saillie radialement à partir de la broche au niveau de ou de manière adjacente à son extrémité d'attaque.

9. Broche pour bague de serrage de verrouillage selon la revendication 7, dans laquelle les moyens de retenue sont une nervure annulaire s'étendant de manière périphérique autour de la broche au niveau de ou de manière adjacente à son extrémité d'attaque.

10. Broche pour bague de serrage de verrouillage selon l'une quelconque des revendications précédentes, dans laquelle la broche permet également de tester l'efficacité du joint d'étanchéité en dirigeant un fluide sous pression à l'intérieur du corps de raccord de tuyau.
